# EUROPEAN PATENT SPECIFICATION

(11) **EP 2 431 859 B1**
(45) Date of publication and mention of the grant of the patent: **24.10.2018**
(21) Application number: 11180006.6
(22) Date of filing: 05.09.2011
(51) Int. Cl.: G06F 3/12, H04N 1/00

(54) **Image forming apparatus, display control method, and computer-readable recording medium encoded with display control program**
Bilderzeugungsvorrichtung, Anzeigesteuerungsverfahren und computerlesbares Speichermedium mit darauf codiertem Anzeigesteuerungsprogramm
Appareil de formation d'images, procédé de contrôle d'affichage et support d'enregistrement lisible sur ordinateur codé avec le programme de contrôle d'affichage

(30) Priority: 21.09.2010 JP 2010210973
(43) Date of publication of application: 21.03.2012
(73) Proprietor: Konica Minolta Business Technologies, Inc., Chiyoda-ku Tokyo 100-0005 (JP)
(72) Inventor: Sugimoto, Tetsuya, Tokyo 100-0005 (JP)
(74) Representative: Hoffmann Eitle

(56) References cited:
- JP-A- 2005 045 308
- US-A1- 2005 243 359
- US-A1- 2008 108 392
- US-A1- 2010 214 604

## Description

### BACKGROUND OF THE INVENTION

### Field of the Invention

The present invention relates to an image forming apparatus, a display control method, and a computer-readable recording medium encoded with a display control program, and more specifically to an image forming apparatus which is externally operated by remote control, a display control method executed by the image forming apparatus, and a computer-readable recording medium encoded with a display control program.

### Description of the Related Art

In recent years, the functions of a multi function peripheral (MFP) has become more complex, and the contents of the operation screen for setting the operation and the items to be set have become increasingly wide-ranging. In addition, since an MFP is used by a plurality of users, there are cases where it becomes difficult for some users with less opportunity to operate the MFP to learn the complicated operating procedures.

On the other hand, portable information devices such as a mobile phone and a PDA (Personal Digital Assistant) have been provided with higher functions and have become more diverse to meet the needs of the individuals. Since these devices are carried by individuals, their frequency of use is greater in comparison with the MFP so that the users are more familiar with the operation. Moreover, there are many functions that are similar to the functions provided in the MFP, such as transmission and reception of various data and browser operation. Furthermore, the user who carries a portable information device often customizes the color information of the display screen, the language information, the sound function and so on for easier use.

Japanese Patent Laying-Open No. 2004-66502, for instance, describes a technology of connecting such portable information device to an MFP to operate a printing device by remote control from the portable information device. With the technology described by Japanese Patent Laying-Open No. 2004-66502, however, since the user operates by remote since the user operates by remote control using the portable information device, no information is displayed on the display provided in the printing device so that there is the problem that the display would not be used effectively. In US 2005/0243359, an image forming apparatus in the form of a printer is disclosed which is connected with a portable device such as a digital still camera. In response to a top menu acquisition command by the digital still camera, some top menu contents are transmitted from the printer to the digital still camera.

Document US 2008/108392 A1, describes a method and an apparatus for displaying a plurality of different images in a mobile terminal in an external display device and a display unit in various modes. The mobile terminal operates according to a Different Image In and Out (DIIO) mode when the external display device is connected to the mobile terminal. When the external display device is not connected to the mobile terminal, the mobile terminal displays the plurality of different images in the display unit of the mobile terminal by operating according to a Picture-In-Picture (PIP) mode or an Overlay mode, so as to take into consideration size limitations of the display unit of the mobile terminal.

### SUMMARY OF THE INVENTION

The present invention has been accomplished in view of the foregoing problem, and an object of the present invention is to provide an image forming apparatus as defined in claim 1.

Another object of the present invention is to provide a display control method as defined in claim 7.

Yet another object of the present invention is to provide a computer-readable recording medium encoded with a display control program as defined in claim 10.

Additional aspects of the invention are defined in dependent claims.

The features, aspects, and advantages of the present invention will become more apparent from the following detailed description of the present invention when taken in conjunction with the accompanying drawings.

### BRIEF DESCRIPTION OF THE DRAWINGS

Fig. 1 is an overall schematic diagram of an image forming system according to one embodiment of the present invention.
Fig. 2 is a perspective view illustrating the external appearance of an MFP.
Fig. 3 is a block diagram showing an overview of a hardware arrangement of the MFP.
Fig. 4 is a functional block diagram showing an overview of a hardware arrangement of a portable information device.
Fig. 5 is a diagram for the description of the concept of a server-client system in the image forming system.
Fig. 6 is a functional block diagram showing an overview of the functions of a CPU (Central Processing Unit) 111 provided in the MFP.
Fig. 7 is a flow chart illustrating one example of the flow of a display control process.

### DESCRIPTION OF THE PREFERRED EMBODIMENTS

The preferred embodiments of the present invention will be described below in conjunction with the drawings. In the following description, the same or corresponding parts are denoted by the same reference characters. Their names and function are also the same. Thus, a detailed description thereof will not be repeated.

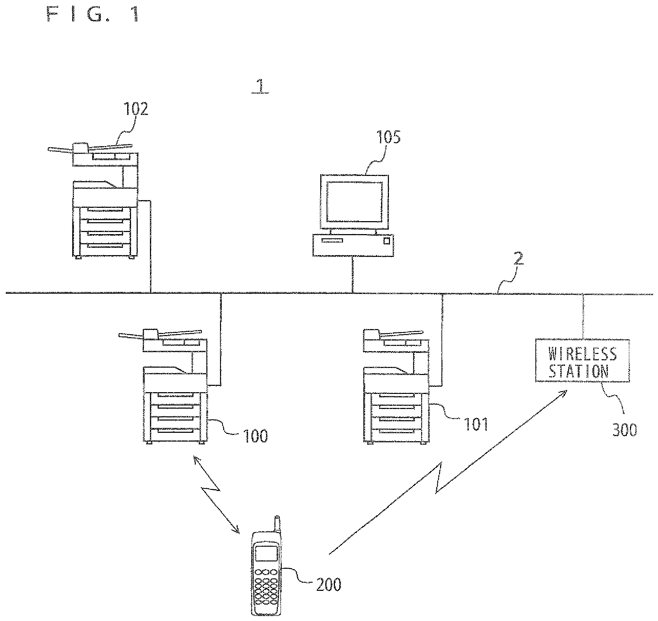

Fig. 1 is an overall schematic diagram of an image forming system according to one embodiment of the present invention. With reference to Fig. 1, an image forming system 1 includes MFPs (Multi Function Peripherals) 100, 101, and 102 serving as image forming apparatuses each connected to a network 2, a personal computer (hereinafter referred to as a "PC") 105, a portable information device 200, and a wireless station 300.

PC 105 is a common computer and has a printer driver program installed for controlling MFPs 100, 101, and 102. In addition, when MFPs 100, 101, and 102 are of different kinds, three types of printer driver programs for controlling MFPs 100, 101, and 102 would each be installed in PC 105.

Each of MFPs 100, 101, and 102 includes a scanner device for scanning a sheet of original manuscript, an image forming device for forming an image on recording media such as a sheet of paper based on image data, and a facsimile device, and has an image scanning function, a copying function, and a facsimile transmission and reception function. Moreover, although MFPs 100, 101, and 102 are described as an example in the present embodiment, MFPs 100, 101, and 102 may be replaced by an apparatus having the function to form an image, such as a printer, a facsimile device and the like, for instance. Furthermore, since the functions of MFPs 100, 101, and 102 are similar, MFP 100 will be described as an example in the following description unless mentioned otherwise.

Portable information device 200 is a common mobile phone which communicates by wireless with a base station connected to a mobile phone network and which is thereby connected to the mobile phone network, and is capable of calling and data communication. In addition, portable information device 200 is provided with a wireless LAN (Local Area Network) function and is capable of connecting to network 2 via wireless station 300. Portable information device 200 is not limited to a mobile phone and may be a compact portable computer such as a PDA.

Network 2 is a local area network (LAN) and the form of connection may be by cable or wireless. Moreover, network 2 is not limited to the LAN and may be a network using a Public Switched Telephone Network (PSTN) or the like. Furthermore, network 2 is connected to a wide area network (WAN) such as the Internet.

Wireless station 300 is a repeater device in network 2 and communicates with portable information device 200 having a wireless LAN communication function to connect portable information device 200 to network 2. MFPs 100, 101, and 102 are each capable of transmitting data to and receiving data from PC 105 via network 2. In addition, MFPs 100, 101, and 102 are each capable of transmitting data to and receiving data from portable information device 200 via network 2 and wireless station 300.

Further, MFPs 100, 101, and 102 each may directly be connected by wireless to portable information device 200 by a communication using a short-range wireless communication standard such as Bluetooth (registered trademark) to transmit and receive data.

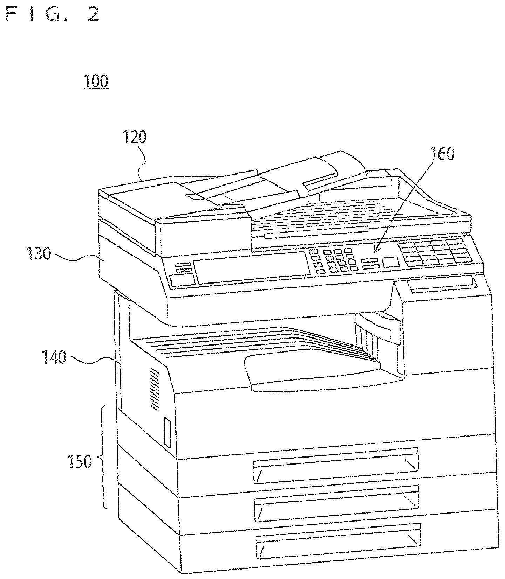

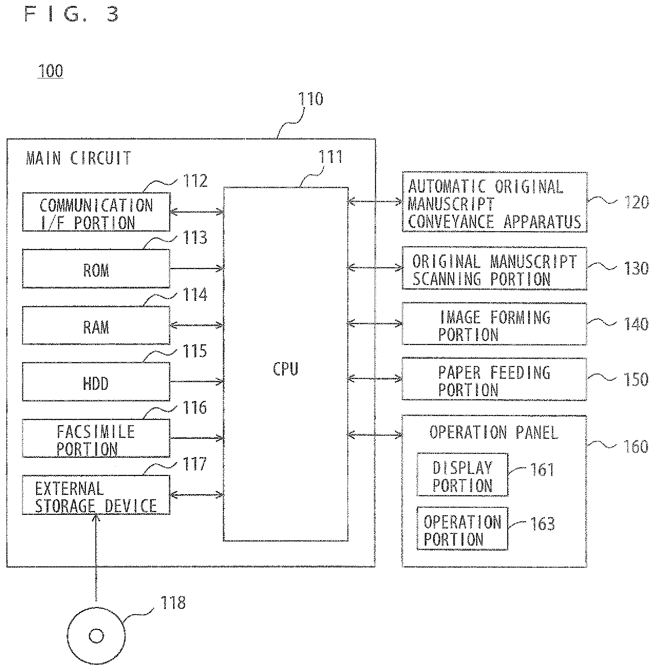

Fig. 2 is a perspective view illustrating the external appearance of an MFP. Fig. 3 is a block diagram showing an overview of a hardware arrangement of the MFP. With reference to Figs. 2 and 3, MFP 100 includes a main circuit 110, an original manuscript scanning portion 130 to scan a sheet of an original manuscript, an automatic original manuscript conveyance apparatus 120 to convey the sheet of the original manuscript to original manuscript scanning portion 130, an image forming portion 140 to form an image on a sheet of paper and the like based on image data outputted by original manuscript scanning portion 130 after it scans the sheet of the original manuscript, a paper feeding portion 150 to supply a sheet of paper to image forming portion 140, and an operation panel 160 serving as a user interface.

Main circuit 110 includes a CPU 111, a communication interface (I/F) portion 112, a ROM (Read Only Memory) 113, a RAM (Random Access Memory) 114, a hard disk drive (HDD) 115 serving as a mass storage device, a facsimile portion 116, and an external storage device 117 onto which a CD-ROM (Compact Disk Read Only Memory) 118 is mounted. CPU 111 is connected to automatic original manuscript conveyance apparatus 120, original manuscript scanning portion 130, image forming portion 140, paper feeding portion 150, and operation panel 160 and controls the entire MFP 100.

ROM 113 stores a program to be executed by CPU 111 or the data required for execution of that program. RAM 114 is used as a work area when CPU 111 executes a program. In addition, RAM 114 temporarily stores the scanned image sent continuously from original manuscript scanning portion 130.

Operation panel 160 is provided on a top surface of MFP 100 and includes a display portion 161 and an operation portion 163. Display portion 161 is a display device such as a liquid crystal display (LCD) or an organic ELD (Electro-Luminescence Display), and displays an instruction menu for a user, information related to the image data obtained, and such. Operation portion 163 is provided with a plurality of keys, and accepts input of data such as a number, a character, and a variety of instructions given by user operation corresponding to the keys. Operation portion 163 further includes a touch panel provided on display portion 161.

Communication I/F portion 112 is an interface for connecting MFP 100 to network 2. CPU 111 communicates with MFP 101, MFP 102, PC 105, or portable information device 200 via communication I/F portion 112 to transmit and receive data. Moreover, communication I/F portion 112 is capable of communicating with a computer connected to the Internet via network 2.

Facsimile portion 116 is connected to a PSTN and transmits facsimile data to the PSTN or receives the facsimile data from the PSTN. Facsimile portion 116 stores the received facsimile data in HDD 115 or outputs it to image forming portion 140. Image forming portion 140 prints the facsimile data received by facsimile portion 116 onto a sheet of paper. In addition, facsimile portion 116 converts the data stored in HDD 115 into facsimile data and transmits the converted data to a facsimile device connected to the PSTN.

External storage device 117 has CD-ROM 118 mounted thereto. CPU 111 is capable of accessing CD-ROM 118 via external storage device 117. CPU 111 loads a program stored in CD-ROM 118 mounted on external storage device 117 into RAM 114 and executes it. Moreover, the program to be executed by CPU 111 is not limited to the program stored in CD-ROM 118, and a program stored in HDD 115 may be loaded into RAM 114 and executed. In this case, another computer connected to network 2 may rewrite the program stored in HDD 115 of MFP 100 or it may additionally write in a new program. Moreover, MFP 100 may download a program from another computer connected to network 2 and store this program in HDD 115. The program referred to here includes not only a program directly executable by CPU 111 but also a source program, a compressed program, an encrypted program, and the like.

In image forming system 1 according to the present embodiment, the data is transmitted and received among MFPs 100, 101, 102 and portable information device 200. As for the protocol for transmitting and receiving the data, it is possible to use any given protocol as long as the origin of the transmission can be specified at the apparatus on the receiving end. As the protocol for transmitting and receiving data, for instance, HTTP (Hypertext Transfer Protocol), FTP (File Transfer Protocol), SMTP (Simple Mail Transfer Protocol), POP (Post Office Protocol) and the like are used.

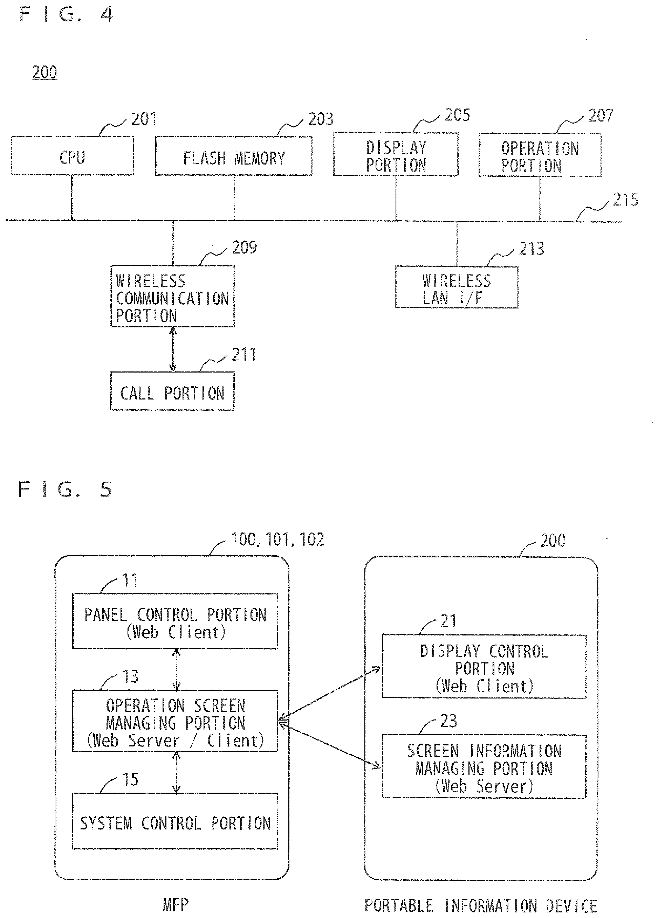

Fig. 4 is a functional block diagram showing an overview of a hardware arrangement of a portable information device. With reference to Fig. 4, portable information device 200 includes a CPU 201 for controlling the entire portable information device 200, a flash memory 203 to store data in a non-volatile manner, a display portion 205 to display information, an operation portion 207 to accept the input of an operation by a user, a wireless communication portion 209 being connected to a call portion 211, and a wireless LAN I/F 213.

Wireless communication portion 209 communicates by wireless with a base station for mobile phones connected to a mobile phone network. Wireless communication portion 209 connects portable information device 200 to the mobile phone network and allows data communication and calling using call portion 211. Wireless communication portion 209, when communicating data, outputs the data derived by decoding the radio signal received from the base station for mobile phones to CPU 201. In addition, wireless communication portion 209 encodes the data inputted from CPU 201 and transmits the encoded data to the base station for mobile phones.

Wireless communication portion 209, when calling, decodes the audio signal derived by demodulating the radio signal received from the base station for mobile phones and outputs the decoded audio signal to call portion 211. In addition, wireless communication portion 209 encodes the voice inputted from call portion 211 and transmits the encoded voice to the base station for mobile phones. Call portion 211 is provided with a microphone and a speaker, and outputs the voice inputted from wireless communication portion 209 from the speaker and outputs the voice inputted from the microphone to wireless communication portion 209.

Display portion 205 is a display device such as an LCD or an organic ELD, and displays an instruction menu for a user, information related to image data obtained, and so on. Operation portion 207 is provided with a plurality of keys, and accepts input of data such as a number, a character, and a variety of instructions given by user operation corresponding to the keys.

Wireless LAN I/F 213 is an interface for communicating with wireless station 300 and connecting portable information device 200 to network 2. In the case where each of MFPs 100, 101, and 102 functions as a Web server, by registering in portable information device 200 in advance a URL (Uniform Resource Locator) of a Web page stored by each of MFPs 100, 101, and 102, portable information device 200 is able to receive the Web pages from MFPs 100, 101, and 102, which makes transmission and reception of data possible. In addition, an IP (Internet Protocol) address or a MAC (Media Access Control) address for each of MFPs 100, 101, and 102 may be registered in advance, and portable information device 200 may communicate with MFPs 100, 101, and 102 using the IP addresses or the MAC addresses.

In the image forming system according to the present embodiment, it is possible to operate MFPs 100, 101, and 102 by remote control with portable information device 200. For this purpose, MFPs 100, 101, and 102 have a program installed therein to allow remote control operation by portable information device 200, while a program to enable the remote control operation is installed in portable information device 200. For instance, in the image forming system according to the present embodiment, the remote control operation of MFPs 100, 101, and 102 by portable information device 200 is realized using a server-client system.

Fig. 5 is a diagram for describing the concept of a server-client system in the image forming system. With reference to Fig. 5, MFPs 100, 101, and 102 include a panel control portion 11, an operation screen managing portion 13, and a system control portion 15. System control portion 15 controls automatic original manuscript conveyance apparatus 120, original manuscript scanning portion 130, image forming portion 140, and paper feeding portion 150 provided in each of MFPs 100, 101, and 102. Portable information device 200 includes a display control portion 21 and a screen information managing portion 23. Operation screen managing portion 13 functions as a Web server, while panel control portion 11 and display control portion 21 function as Web clients in relation to operation screen managing portion 13. In addition, operation screen managing portion 13 also functions as a Web client, while screen information managing portion 23 functions as a Web server in relation to operation screen managing portion 13 functioning as a Web client.

To describe more specifically, panel control portion 11 is implemented, for instance, by CPU 111 executing a browsing program, makes a request for an operation screen to operation screen managing portion 13 which is a Web server, and displays the operation screen outputted by operation screen managing portion 13 at display portion 161. Moreover, panel control portion 11 accepts the operation inputted into operation portion 163 by a user according to the operation screen displayed at display portion 161 and outputs the operation to operation screen managing portion 13 serving as a Web server. When the operation is inputted from panel control portion 11, operation screen managing portion 13 executes a CGI (Common Gateway Interface), for instance, and outputs a command to system control portion 15.

Display control portion 21 provided in portable information device 200 is implemented, for instance, by CPU 201 executing a browsing program, makes a request for an operation screen to operation screen managing portion 13 which is a Web server, and displays the operation screen outputted by operation screen managing portion 13 at display portion 205. Moreover, display control portion 21 accepts the operation inputted into operation portion 207 by the user according to the operation screen displayed at display portion 205 and outputs the operation to operation screen managing portion 13 serving as a Web server. When the operation is inputted from display control portion 21, operation screen managing portion 13 executes the CGI, for instance, and outputs a command to system control portion 15. Thus, the remote control operation of MFPs 100, 101, and 102 by portable information device 200 is realized.

Screen information managing portion 23 provided in portable information device 200 manages a screen stored in advance in portable information device 200 and outputs the screen itself or a network address of the screen such as a URL according to the request. Operation screen managing portion 13 provided in MFPs 100, 101, and 102, while functioning as a Web server for display control portion 21, also functions as a Web client in relation to screen information managing portion 23. When panel control portion 11 provided in MFPs 100, 101, and 102 makes a request for the operation screen to operation screen managing portion 13 serving as a Web server, operation screen managing portion 13 functions as a Web client and outputs a display instruction request to screen information managing portion 23 serving as a Web server. Since screen information managing portion 23 outputs a display instruction according to the display instruction request, operation screen managing portion 13 functioning as a Web client receives the input of the display instruction from screen information managing portion 23. Although the details of the display instruction will be described later, it is the information for specifying a screen. When the display instruction is inputted from screen information managing portion 23, operation screen managing portion 13 functions as a Web server and outputs the screen specified by the display instruction inputted from screen information managing portion 23 to panel control portion 11. Panel control portion 11 displays the screen inputted from screen information managing portion 23 at display portion 161. Consequently, while MFPs 100, 101, and 102 are operated by remote control by portable information device 200, the screen as instructed by portable information device 200 is displayed at display portion 161.

Furthermore, although the example in which a server-client system in image forming system 1 is realized by a Web server and a Web client is described in the present embodiment, the server-client system may also be realized by installing a dedicated program in each of MFPs 100, 101, 102 and portable information device 200.

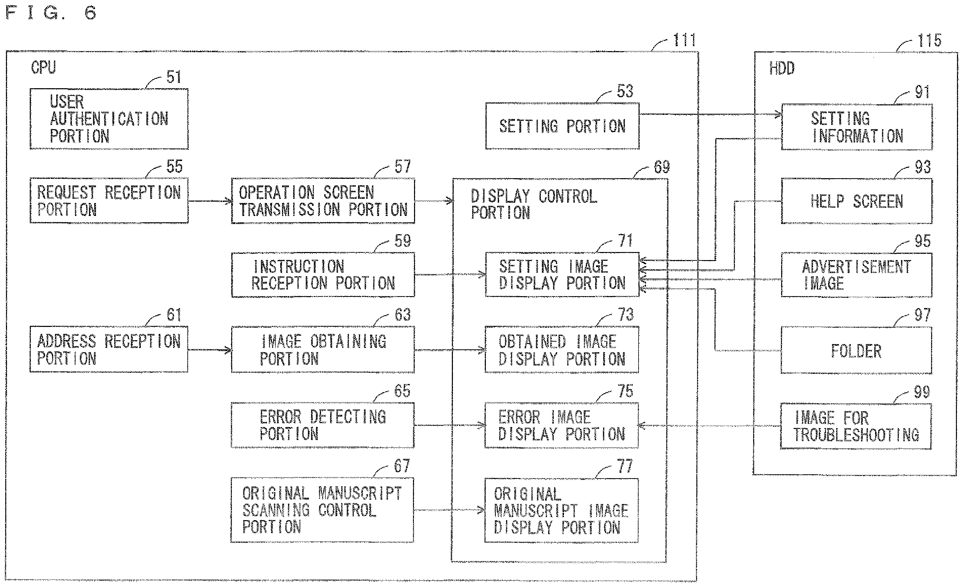

Fig. 6 is a block diagram showing an overview of the functions of CPU 111 provided in an MFP together with data stored in a HDD. The functions of CPU 111 provided in MFP 100 shown in Fig. 6 are formed in CPU 111 by CPU 111 executing a program stored in ROM 113, HDD 115, or CD-ROM 118.

With reference to Fig. 6, CPU 111 includes a user authentication portion 51 to authenticate a user, a setting portion 53 to set a default value of an image to be displayed, a request reception portion 55 to receive a request of remote control operation, an operation screen transmission portion 57 to transmit an operation screen for the remote control operation, an instruction reception portion 59, an address reception portion 61, an image obtaining portion 63 to obtain the image, an error detecting portion 65 to detect an error, an original manuscript scanning control portion 67 to control original manuscript scanning portion 130, and a display control portion 69 to control display portion 161.

User authentication portion 51 authenticates the user who operates MFP 100. For instance, the set of a user ID and a password of a user whose use of MFP 100 has been approved is stored in HDD 115 in advance, and if the set of the user ID and the password inputted into MFP 100 by the user matches that stored in HDD 115, the user is authenticated. When the user is authenticated, user authentication portion 51 allows the log-in. In the case where the user operates portable information device 200 to operate MFP 100 by remote control, user authentication portion 51 transmits an authentication screen to portable information device 200 via communication I/F portion 112, and authenticates the user of portable information device 200 and allows the log-in on the condition that the set of the user ID and the password received from portable information device 200 matches that stored in HDD 115.

Setting portion 53 sets one of the multiple types of images as an image for display. For instance, if an administrator of MFP 100 inputs a type of image into operation portion 163, setting portion 53 sets an image of the type of image inputted as the image for display. A plurality of images are categorized into multiple types and stored in advance in HDD 115, and the administrator can select one from the multiple types into which the plurality of images are categorized. Here, HDD 115 stores a help screen 93 as a first type of image, stores data in a predetermined folder 97 as a second type of image, and stores an advertisement image 95 as a third type of image.

Help screen 93 corresponds to an operation screen for the user to input an operation and is a screen for assisting the user to input the operation in the operation screen. For instance, the help screen is a screen which includes a message and/or a figure for aiding the input according to the operation screen specified by an operation screen name. The operation screens include an operation screen for remote control operation as will be described later and a plurality of them exists. Consequently, a plurality of help screens 93 are stored in correspondence to a plurality of operation screens, respectively. The data stored in folder 97 is data which include information for notifying the user of MFP 100, for instance, an electronic mail addressed to the logged-in user, the company news, and the like. Advertisement image 95 is an image for advertisement and is provided by a sponsor, for instance.

Based on the instruction inputted by the administrator into operation portion 163, setting portion 53 stores in HDD 115 the setting information including the type identification information for identifying the type selected, in order to set one type of image selected from the first to third types of images as the image for display. Thus, setting information 91 is stored in HDD 115.

Request reception portion 55 controls communication I/F portion 112 to receive a request from portable information device 200 operated by the user authenticated by user authentication portion 51. The requests to be received from portable information device 200 are, for instance, a transmission request for the operation screen for a copy process, a transmission request for the operation screen for a facsimile transmission and reception process, a transmission request for the operation screen for a print process, a transmission request for the operation screen for a data transmission process, a transmission request for the operation screen for a process of maintaining management information, and so on. Request reception portion 55 outputs the received request and the apparatus identification information for identifying portable information device 200 that has transmitted the request as a set to operation screen transmission portion 57. The apparatus identification information is an IP address or a MAC address, for instance.

When the set of the request and the apparatus identification information is inputted from request reception portion 55, operation screen transmission portion 57 transmits the operation screen corresponding to the received request to portable information device 200 via communication I/F portion 112. A plurality of operation screens for remote control operation to be transmitted to portable information device 200 are stored in advance in ROM 113, and the operation screen corresponding to the request is selected from the plurality of operation screens for remote control operation and is transmitted to portable information device 200 via communication I/F portion 112. In addition, operation screen transmission portion 57 outputs the operation screen name for identifying the transmitted operation screen to display control portion 69.

In portable information device 200 receiving the operation screen, the received operation screen is displayed at display portion 205, and the operation inputted into operation portion 207 by the user is transmitted back to MFP 100. When communication I/F portion 112 receives the operation transmitted back by portable information device 200, operation screen transmission portion 57 obtains the received operation and executes a process according to the operation. Consequently, the remote control operation of MFP 100 by portable information device 200 is realized.

In the case where the operation screen for a copy process is transmitted, for instance, the operation for executing the copy process is received so that the copy process is executed. Moreover, in the case where the operation screen for a facsimile transmission and reception process is transmitted, the operation for executing the facsimile transmission and reception process is received so that the facsimile transmission and reception process is executed. In the case where the operation screen for a print process is transmitted, the operation for executing the print process is received so that the print process is executed. In the case where the operation screen for a data transmission process is transmitted, the operation for executing the data transmission process is received so that the data transmission process is executed. In the case where the operation screen for a process of maintaining management information is transmitted, the operation for executing the process of maintaining is received so that the process of maintaining the management information is executed.

Instruction reception portion 59 controls communication I/F portion 112 to receive a selection instruction from portable information device 200 being operated by the user authenticated by user authentication portion 51. More specifically, instruction reception portion 59 transmits a selection screen to portable information device 200 being operated by the user authenticated by user authentication portion 51. The selection screen is a screen for accepting an operation to select one type of image from first to third types of images. When the user of portable information device 200 inputs the operation to select one type of image from first to third types of images into portable information device 200, portable information device 200 transmits the type identification information for specifying the selected type to MFP 100. Instruction reception portion 59 controls communication I/F portion 112 to receive the type identification information from portable information device 200. The type identification information received is the selection instruction to select one type of image from among first to third types of images. Upon receiving the type identification information from portable information device 200, instruction reception portion 59 outputs the received type identification information to display control portion 69.

Display control portion 69 includes a setting image display portion 71, an obtained image display portion 73, an error image display portion 75, and an original manuscript image display portion 77. When an operation screen name is inputted from operation screen transmission portion 57, setting image display portion 71 reads setting information 91, provided that no type identification information has been inputted from instruction reception portion 59, and displays an image of the type specified by the type identification information included in setting information 91 at display portion 161. When the operation screen name is inputted from operation screen transmission portion 57, if the type identification information has been inputted from instruction reception portion 59, setting image display portion 71 displays an image of the type specified by the type identification information inputted from instruction reception portion 59 at display portion 161 without reading setting information 91.

When the type identification information specifies the first type of image, setting image display portion 71 reads the help screen corresponding to the operation screen specified by the operation screen name inputted from operation screen transmission portion 57 from a plurality of help screens 93 stored in HDD 115 and displays the read help screen at display portion 161. Every time an operation screen name is inputted from operation screen transmission portion 57, setting image display portion 71 reads the help screen corresponding to the operation screen and displays it at display portion 161. Thus, the user operating portable information device 200 is able simultaneously to view the operation screen displayed at display portion 205 of portable information device 200 and the help screen displayed at display portion 161 of MFP 100. As a result, an operation may be inputted into operation portion 207 according to the operation screen while the help screen is viewed. Thus, there is no need to switch between the operation screen and the help screen.

When the type identification information specifies the second type of image, setting image display portion 71 reads the data stored in folder 97 of HDD 115 and displays an image of the read data at display portion 161. Consequently, the user operating portable information device 200 is able simultaneously to view the operation screen displayed at display portion 205 of portable information device 200 and the image of the data displayed at display portion 161 of MFP 100. Since the data stored in folder 97 include an electronic mail and company news, it becomes possible to notify the user of the electronic mail addressed to the user authenticated by user authentication portion 51 and of the company news related to that user.

When the type identification information specifies the third type of image, setting image display portion 71 reads advertisement image 95 stored in HDD 115 and displays the read advertisement image at display portion 161. Consequently, the user operating portable information device 200 is able simultaneously to view the operation screen displayed at display portion 205 of portable information device 200 and the advertisement image displayed at display portion 161 of MFP 100.

Address reception portion 61 controls communication I/F portion 112 to receive a network address assigned to an image from portable information device 200 operated by the user authenticated by user authentication portion 51. Here, the network address is a URL. More specifically, instruction reception portion 59 transmits an address designation screen to portable information device 200 being operated by the user authenticated by user authentication portion 51. The address designation screen includes an area to input the URL assigned to an image. If the user of portable information device 200 inputs the URL to portable information device 200, portable information device 200 transmits the inputted URL to MFP 100. When communication I/F portion 112 receives the URL from portable information device 200, address reception portion 61 receives the URL. Upon receiving the URL from portable information device 200, address reception portion 61 outputs the received URL to image obtaining portion 63.

Image obtaining portion 63 obtains via communication I/F portion 112 the image specified by the URL inputted from address reception portion 61 and outputs the obtained image to obtained image display portion 73.

When an image is inputted from image obtaining portion 63, obtained image display portion 73 displays the inputted image at display portion 161. In the case where an image is being displayed at display portion 161 by setting image display portion 71, the image inputted from image obtaining portion 63 is given priority over the former image and is displayed at display portion 161 by obtained image display portion 73.

Error detecting portion 65 detects an error that occurs in MFP 100. For instance, errors such as jamming of paper, toner run-out and so on are detected by a sensor. When an error is detected, error detecting portion 65 outputs an error code predetermined for the detected error to error image display portion 75.

When an error code is inputted from error detecting portion 65, error image display portion 75 reads the image for troubleshooting corresponding to the error code from among the images for troubleshooting 99 stored in HDD 115 and displays the read image for troubleshooting at display portion 161. Every time an error code is inputted from error detecting portion 65, error image display portion 75 reads the image for troubleshooting corresponding to the inputted error code and displays the read image for troubleshooting at display portion 161. In the case where an image is being displayed at display portion 161 by setting image display portion 71 or in the case where an image is being displayed by obtained image display portion 73, the image for troubleshooting is given priority over those images and is displayed at display portion 161 by error image display portion 75.

Thus, the user operating portable information device 200 is able simultaneously to view the operation screen displayed at display portion 205 of portable information device 200 and the image for troubleshooting displayed at display portion 161 of MFP 100. As a result, the user is able to perform the work to rectify the error while viewing the image for troubleshooting, and thereafter, the user is able to input an operation into operation portion 207 according to the operation screen.

Original manuscript scanning control portion 67 controls original manuscript scanning portion 130 to obtain an original manuscript image outputted by original manuscript scanning portion 130 after it scans a sheet of the original manuscript. Original manuscript scanning control portion 67 outputs the obtained original manuscript image to original manuscript image display portion 77.

In response to an original manuscript image being inputted from original manuscript scanning control portion 67, original manuscript image display portion 77 displays the original manuscript image at display portion 161. In other words, the original manuscript image is displayed as a preview when a scan process is executed by MFP 100. If the original manuscript image is inputted from original manuscript scanning control portion 67, either in the case where an image is being displayed at display portion 161 by setting image display portion 71 or in the case where an image is being displayed by obtained image display portion 73, the original manuscript image is given priority over those images and is displayed at display portion 161 by original manuscript image display portion 77.

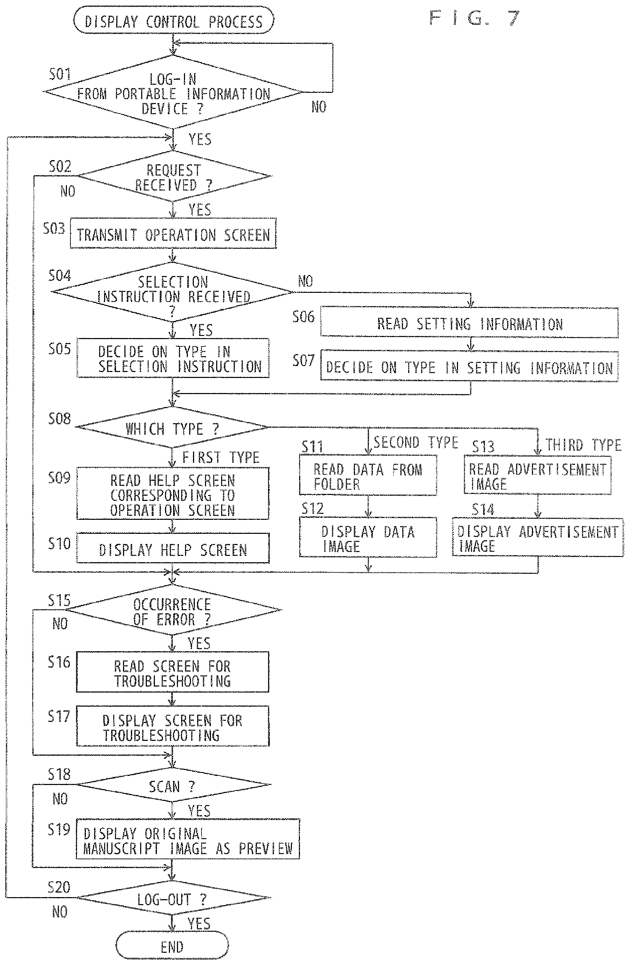

Fig. 7 is a flow chart illustrating one example of the flow of a display control process. The display control process is a process executed by CPU 111 when CPU 111 provided in MFP 100 executes a program stored in ROM 113, HDD 115, or CD-ROM 118. With reference to Fig. 7, CPU 111 determines whether a log-in from portable information device 200 has been successful or not (step S01). When communication I/F portion 112 receives a user ID and a password from portable information device 200 and if the authentication based on the received user ID and password is successful, it is determined that the log-in has been successful. The process stands by until the log-in from portable information device 200 succeeds (NO in step S01), and if the log-in has been successful (YES in step S01), the process proceeds to a step S02.

In step S02, it is determined whether a request has been received or not. If the request has been received, the process proceeds to a step S03, but if not, the process proceeds to a step S15. It is determined whether or not communication I/F portion 112 has received the request from portable information device 200 which succeeded in logging-in in step S01. The request is the request for transmission of an operation screen. In step S03, the operation screen corresponding to the received request is transmitted via communication I/F portion 112 to portable information device 200 which succeeded in logging-in in step S01.

In the next step S04, it is determined whether a selection instruction has been received or not. A selection screen is transmitted via communication I/F portion 112 to portable information device 200 which succeeded in logging-in in step S01, and it is determined whether the selection instruction has been received from portable information device 200. If the selection instruction has been received, the process proceeds to a step S05, but if not, the process proceeds to a step S06. In step S05, the type of image specified by the type identification information included in the received selection instruction is decided to be the type of the image for display, and the process proceeds to a step S08.

On the other hand, in step S06, setting information 91 stored in HDD 115 is read. In the next step S07, the type of image specified by the type identification information included in the read setting information is decided to be the type of the image for display, and the process proceeds to step S08.

At step S08, the process diverges based on the type decided in step S05 or in step S07. If the type is the first type, the process proceeds to a step S09; if it is the second type, the process proceeds to a step S11; and if it is the third type, the process proceeds to a step S13.

In step S09, a help screen corresponding to the operation screen transmitted in step S03 is read from among a plurality of help screens 93 stored in HDD 115. In the next step S10, the help screen read in step S09 is displayed at display portion 161, and the process proceeds to step S15.

In step S11, the data stored in folder 97 of HDD 115 is read. In the next step S12, an image of the read data is displayed at display portion 161, and the process proceeds to step S15.

In step S13, advertisement image 95 stored in HDD 115 is read. In the next step S14, the read advertisement image 95 is displayed at display portion 161, and the process proceeds to step S15.

In step S15, it is determined whether an error has occurred or not. If an error has occurred, the process proceeds to a step S16, but if not, the process proceeds to a step S18. In step S16, image for troubleshooting 99 stored in HDD 115 in advance in correspondence to the occurred error is read. In the next step S17, the read image for troubleshooting 99 is displayed at display portion 161, and the process proceeds to step S18.

In step S18, it is determined whether a scan has been executed or not. The scan to scan a sheet of the original manuscript is executed as a result of the user inputting an instruction to scan by remote control operation. If the scan has been executed, the process proceeds to a step S19, but if not, the process proceeds to a step S20. In step S19, the original manuscript image outputted by original manuscript scanning portion 130 after it scans a sheet of the original manuscript is displayed as a preview at display portion 161, and the process proceeds to step S20.

In step S20, it is determined whether a log-out instruction has been accepted or not. If the log-out instruction has been received from portable information device 200 which succeeded in logging-in in step S01, the log-out instruction is accepted. If the log-out instruction is accepted, the process is terminated; but if not, the process goes back to step S02.

As described above, MFPs 100, 101, and 102 according to the present embodiment include communication I/F portion 112 to communicate with portable information device 200, operation portion 163 into which an operation by a user is inputted, display portion 161 to display an image, operation screen transmission portion 57 to transmit, in response to a request being received from portable information device 200, an operation screen corresponding to the received request among a plurality of operation screens for accepting an operation to portable information device 200 via communication I/F portion 112, and display control portion 69 to display at display portion 161 in response to transmission of the operation screen an operation unnecessary image which does not require the user to input an operation into operation portion 163. As a result, the user is able to view the operation unnecessary image while operating MFPs 100, 101, and 102 with portable information device 200.

In addition, MFPs 100, 101, and 102 according to the present embodiment further include setting portion 53 to set one selected from multiple types of images as an image for display, and display control portion 69 displays an image of the type set as the image for display by setting portion 53 from among the multiple types of images. Thus, the type of the image set in advance by the user to be the image for display can be displayed at display portion 161. By storing setting information 91 for each user, a different type of image can be displayed for each logged-in user at display portion 161.

Moreover, MFPs 100, 101, and 102 according to the present embodiment further include instruction accepting portion 59 to accept from portable information device 200 an instruction to select one from the multiple types of images, and display control portion 69 displays at display portion 161 an image of the type selected by the accepted instruction from among the multiple types of images if the instruction is accepted by instruction accepting/reception portion 59, and displays an image of the type set by setting portion 53 from among the multiple types of images if the instruction is not accepted. Thus, the user operating portable information device 200 is able to designate from portable information device 200 the type of the image to be displayed at display portion 161 while operating MFP 100.

Further, MFPs 100, 101, and 102 according to the present embodiment further include image obtaining portion 63 to obtain an image specified by a URL accepted if a URL assigned to an image is received from portable information device 200, and display control portion 69 displays the obtained image at display portion 161 if the URL for specifying the image is received from portable information device 200. Thus, the user operating portable information device 200 is able to have display portion 161 display the image of the URL inputted into portable information device 200. For instance, at the stage prior to operating MFPs 100, 101, and 102 by remote control, if the user designates the URL of the Web page which the user was browsing on portable information device 200, the Web page which was being displayed on portable information device 200 before the remote control operation can be displayed at display portion 161 of MFPs 100, 101, and 102.

Furthermore, MFPs 100, 101, and 102 according to the present embodiment further include error detecting portion 65 to detect an error that occurs in MFPs 100, 101, and 102 and HDD 115 to store a plurality of screens for troubleshooting which respectively correspond to a plurality of errors that occur in an apparatus and which indicate the operation by the user attending to the errors, and display control portion 69 includes error image display portion 75 to display a screen for troubleshooting corresponding to a detected error if an error is detected by error detecting portion 65. Thus, the operation screen and the troubleshooting screen can be viewed simultaneously during the remote control operation, and the user may perform the work to rectify the error while looking at the troubleshooting screen and may perform the remote control operation based on the operation screen after the error has been rectified.

In addition, MFPs 100, 101, and 102 according to the present embodiment further include original manuscript scanning portion 130 to scan a sheet of an original manuscript to obtain an original manuscript image, and display control portion 69 includes original manuscript image display portion 77 to display at display portion 161 an obtained original manuscript image if the original manuscript image is obtained by original manuscript scanning portion 130. When a scan process is executed by MFP 100, the original manuscript image is displayed as a preview at display portion 161. Consequently, the user may check the scanned original manuscript image using the original manuscript image displayed at display portion 161 while viewing the operation screen with portable information device 200. In the case where the original manuscript image is to be displayed on portable information device 200 instead of the operation screen, while the operation screen needs to be displayed again if the sheet of an original manuscript is to be re-scanned, since the original manuscript image is displayed at display portion 161, there is no need to display the operation screen again and an operation can be inputted immediately.

Although the above-described embodiment is described in relation to image forming system 1, it goes without saying that the present invention can be specified as a display control method which causes MFPs 100, 101, and 102 to execute the display control process shown in Fig. 7 or as a display control program for causing CPU 111 that controls MFPs 100, 101, and 102 to execute that display control method.

Although the present invention has been described and illustrated in detail, it is clearly understood that the same is by way of illustration and example only and is not to be taken by way of limitation, the scope of the present invention being limited only by the terms of the appended claims.

## Claims

1. An image forming apparatus (100), comprising:
a communication means (112) to communicate with a portable information device (200);
an operation accepting means (163) into which an operation by a user is inputted;
a display means (161) to display an image;
an operation screen transmission means (57) to transmit, in response to a request being received from said portable information device (200), an operation screen corresponding to said request received among a plurality of operation screens for accepting an operation to said portable information device (200) via said communication means (112); and
a display control means (69) to display at said display means (161) in response to transmission of said operation screen, a help screen (93) for assisting the user to operate in the operation screen being displayed on a display means (205) of the portable information device (200), the help screen (93) being provided to assist the input of the same user as the user who inputs on the operation screen displayed on the portable information device (200).

2. The image forming apparatus according to claim 1, further comprising a setting means (53) to set one selected from multiple types of images as an image for display, wherein
said display control means (71) displays an image of a type set as the image for display by said setting means (53) from among said multiple types of images.

3. The image forming apparatus according to claim 2, further comprising an instruction accepting means (59) to accept from said portable information device (200) an instruction to select one from said multiple types of images, wherein
said display control means (71) displays an image of a type selected by the instruction accepted by said instruction accepting means (59) from among said multiple types of images if the instruction is accepted by said instruction accepting means (59) and displays an image of a type set by said setting means (53) from among said multiple types of images if the instruction is not accepted by said instruction accepting means (59).

4. The image forming apparatus according to claim 1, further comprising an image obtaining means (63) to obtain an image specified by a network address accepted if a network address assigned to an image is received from said portable information device (200), wherein
said display control means (73) displays said image obtained if the network address for specifying the image is received from said portable information device (200).

5. The image forming apparatus according to claim 1, further comprising:
an error detecting means (65) to detect an error that occurs in the apparatus, and
a trouble screen storage means (115) to store a plurality of screens for troubleshooting which respectively correspond to a plurality of errors that occur in the apparatus and which indicate an operation by a user attending to the errors, wherein
said display control means (75) displays a screen for troubleshooting corresponding to an error detected if an error is detected by said error detecting means.

6. The image forming apparatus according to claim 1, further comprising an original manuscript scanning means (67) to scan a sheet of an original manuscript and to obtain an original manuscript image, wherein
said display control means (77) displays an original manuscript image obtained if said original manuscript image is obtained by said original manuscript scanning means.

7. A display control method executed by an image forming apparatus (100),
said image forming apparatus including a communication means (112) to communicate with a portable information device (200),
an operation accepting means (163) into which an operation by a user is inputted, and
a display means (161) to display an image, said display control method comprising the steps of:
receiving (S02) a request from said portable information device;
transmitting (S03) in response to said request being received in said receiving step an operation screen corresponding to said request received among a plurality of operation screens for accepting an operation to said portable information device via said communication means (112); and
displaying (S10, S12, S14, S17, S19) at said display means (161) in response to transmission of said operation screen, a help screen (93) for assisting the user to operate in the operation screen being displayed on a display means (205) of the portable information device (200), the help screen (93) being provided to assist the input of the same user as the user who inputs on the operation screen displayed on the portable information device (200).

8. The display control method according to claim 7, further comprising a step (S06) of setting one selected from multiple types of images as an image for display, wherein
the step of displaying at said display means includes a step (S10, S12, S14) of displaying an image of a type set as the image for display in said setting step from among said multiple types of images.

9. The display control method according to claim 8, further comprising an instruction accepting step (S04) to accept from said portable information device (200) an instruction to select one from said multiple types of images, wherein
the step of displaying at said display means includes a step of displaying an image of a type selected by the instruction accepted in said instruction accepting step from among said multiple types of images if the instruction is accepted in said instruction accepting step and displaying an image of a type set in said setting step from among said multiple types of images if the instruction is not accepted in said instruction accepting step.

10. A computer-readable recording medium encoded with a display control program which is executed by a computer (111), said computer being configured to control an image forming apparatus (100),
said image forming apparatus including
a communication means (112) to communicate with a portable information device (200),
an operation accepting means (163) into which an operation by a user is inputted, and
a display means (161) to display an image, wherein said display control program causes said computer to execute the steps of:
receiving (S02) a request from said portable information device;
transmitting (S03) in response to said request being received in said receiving step an operation screen corresponding to said request received among a plurality of operation screens for accepting an operation to said portable information device via said communication means; and
displaying (S10, S12, S14, S17, S19) at said display means (161) in response to transmission of said operation screen, a help screen (93) for assisting the user to operate in the operation screen being displayed on a display means (205) of the portable information device (200), the help screen (93) being provided to assist the input of the same user as the user who inputs on the operation screen displayed on the portable information device (200).

11. The computer-readable recording medium encoded with a display control program according to claim 10, wherein said display control program causes said computer further to execute a step (S06) of setting one selected from multiple types of images as an image for display, and
the step (S10, S12, S14) of displaying at said display means includes a step of displaying an image of a type set as the image for display in said setting step from among said multiple types of images.

12. The computer-readable recording medium encoded with a display control program according to claim 11, wherein said display control program causes said computer further to execute an instruction accepting/receiving step (S04) to accept from said portable information device an instruction to select one from said multiple types of images, and
the step of displaying at said display means (161) includes a step of displaying an image of a type selected by the instruction accepted in said instruction accepting/receiving step from among said multiple types of images if the instruction is accepted in said instruction accepting/receiving step and displaying an image of a type set in said setting step from among said multiple types of images if the instruction is not accepted in said instruction accepting/receiving step.

## Patentansprüche

1. Bilderzeugungsvorrichtung (100), umfassend:
ein Kommunikationsmittel (112) zum Kommunizieren mit einer tragbaren Informationsvorrichtung (200);
ein Operationsannahmemittel (163), in welches eine Operation durch einen Benutzer eingegeben wird;
ein Anzeigemittel (161) zum Anzeigen eines Bildes; **dadurch gekennzeichnet, dass** die Bilderzeugungsvorrichtung weiter umfasst:
ein Operationsbildschirmübertragungsmittel (57) zum Übertragen, als Reaktion auf eine Anforderung, welche von der tragbaren Informationsvorrichtung (200) empfangen wird, eines der Anforderung entsprechenden Operationsbildschirms, welcher unter einer Vielzahl von Operationsbildschirmen zur Annahme einer Operation an der tragbaren Informationsvorrichtung (200) über das Kommunikationsmittel (112) empfangen wurde; und
ein Anzeigesteuerungsmittel (69) zur Anzeige eines Hilfebildschirms (93) zur Unterstützung des Benutzers beim Operieren in dem auf einem Anzeigemittel (205) der tragbaren Informationsvorrichtung (200) angezeigten Operationsbildschirm an dem Anzeigemittel (161) als Reaktion auf die Übertragung des Operationsbildschirms, wobei der Hilfebildschirm (93) bereitgestellt wird, um die Eingabe desselben Benutzers wie des Benutzers, welcher auf dem auf der tragbaren Informationsvorrichtung (200) angezeigten Operationsbildschirm eingibt, zu unterstützen.

2. Bilderzeugungsvorrichtung nach Anspruch 1, weiter ein Festlegungsmittel (53) umfassend, um ein aus verschiedenen Typen von Bildern ausgewähltes als Bild zur Anzeige festzulegen, wobei
das Anzeigesteuerungsmittel (71) ein Bild eines Typs anzeigt, welches mittels des Festlegungsmittels (53) aus den mehreren Typen von Bildern als das Bild zur Anzeige festgelegt wurde.

3. Bilderzeugungsvorrichtung nach Anspruch 2, weiter ein Anweisungsannahmemittel (59) zum Annehmen einer Anweisung zum Auswählen von einem aus den mehreren Typen von Bildern aus der tragbaren Informationsvorrichtung (200) umfassend, wobei
das Anzeigesteuerungsmittel (71) ein Bild eines Typs anzeigt, welcher von der von dem Anweisungsannahmemittel (59) angenommenen Anweisung aus den mehreren Typen von Bildern ausgewählt wurde, wenn die Anweisung von dem Anweisungsannahmemittel (59) angenommen wird, und ein Bild eines Typs anzeigt, welcher von dem Festlegungsmittel (53) aus den mehreren Typen von Bildern festgelegt wird, wenn die Anweisung nicht von dem Anweisungsannahmemittel (59) angenommen wird.

4. Bilderzeugungsvorrichtung nach Anspruch 1, weiter ein Bilderhaltungsmittel (63) zum Erhalten eines mittels einer Netzwerkadresse angegebenen Bildes umfassend, welches angenommen wird, wenn eine einem Bild zugewiesene Netzwerkadresse aus der tragbaren Informationsvorrichtung (200) empfangen wird, wobei
das Anzeigesteuerungsmittel (73) das erhaltene Bild anzeigt, wenn die Netzwerkadresse zur Angabe des Bildes aus der tragbaren Informationsvorrichtung (200) empfangen wird.

5. Bilderzeugungsvorrichtung nach Anspruch 1, weiter umfassend:
ein Fehlererkennungsmittel (65) zum Erkennen eines Fehlers, welcher in der Vorrichtung auftritt, und
ein Fehlerbildschirmspeichermittel (115) zum Speichern einer Vielzahl von Bildschirmen zur Fehlerbehebung, welche jeweils einer Vielzahl von Fehlern entsprechen, welche in der Vorrichtung auftreten, und welche eine Operation durch einen Benutzer angeben, welcher sich der Fehler annimmt, wobei
das Anzeigesteuerungsmittel (75) einen Bildschirm zur Fehlerbehebung anzeigt, welcher einem erkannten Fehler entspricht, wenn ein Fehler von dem Fehlererkennungsmittel erkannt wird.

6. Bilderzeugungsvorrichtung nach Anspruch 1, weiter ein Mittel zum Scannen von Originalmanuskripten (67) zum Scannen eines Blattes eines Originalmanuskripts und zum Erhalten eines Bildes des Originalmanuskripts umfassend, wobei
das Anzeigesteuerungsmittel (77) ein erhaltenes Bild des Originalmanuskripts anzeigt, wenn das Bild des Originalmanuskripts durch das Mittel zum Scannen von Originalmanuskripten erhalten wird.

7. Anzeigesteuerungsverfahren, welches mittels einer Bilderzeugungsvorrichtung (100) ausgeführt wird,
wobei die Bilderzeugungsvorrichtung ein Kommunikationsmittel (112) zum Kommunizieren mit einer tragbaren Informationsvorrichtung (200),
ein Operationsannahmemittel (163), in welches eine Operation durch einen Benutzer eingegeben wird und
ein Anzeigemittel (161) zum Anzeigen eines Bildes umfasst, wobei das Anzeigesteuerungsverfahren folgende Schritte umfasst:
Empfangen (S02) einer Anforderung aus der tragbaren Informationsvorrichtung; und **dadurch gekennzeichnet, dass** das Verfahren weiter die folgenden Schritte umfasst:
Übertragen (S03), als Reaktion auf die Anforderung, welche in dem Empfangsschritt empfangen wird, eines der Anforderung entsprechenden Operationsbildschirms, welcher unter einer Vielzahl von Operationsbildschirmen zur Annahme einer Operation an der tragbaren Informationsvorrichtung über das Kommunikationsmittel (112) empfangen wurde; und
Anzeigen (S10, S12, S14, S17, S19) eines Hilfebildschirms (93) zur Unterstützung des Benutzers beim Operieren in dem auf einem Anzeigemittel (205) der tragbaren Informationsvorrichtung (200) angezeigten Operationsbildschirm an dem Anzeigemittel (161) als Reaktion auf die Übertragung des Operationsbildschirms, wobei der Hilfebildschirm (93) bereitgestellt wird, um die Eingabe desselben Benutzers wie des Benutzers, welcher auf dem auf der tragbaren Informationsvorrichtung (200) angezeigten Operationsbildschirm eingibt, zu unterstützen.

8. Anzeigesteuerungsverfahren nach Anspruch 7, weiter einen Schritt (S06) zum Festlegen eines aus verschiedenen Typen von Bildern ausgewählten Bildes zur Anzeige umfassend, wobei
der Schritt zur Anzeige an dem Anzeigemittel einen Schritt (S10, S12, S14) zum Anzeigen eines Bildes eines Typs beinhaltet, welcher in dem Festlegungsschritt aus den mehreren Typen von Bildern als das Bild zur Anzeige festgelegt wurde.

9. Anzeigesteuerungsverfahren nach Anspruch 8, weiter einen Anweisungsannahmeschritt (S04) zum Annehmen einer Anweisung zum Auswählen eines aus den mehreren Typen von Bildern aus der tragbaren Informationsvorrichtung (200) umfassend, wobei
der Schritt zur Anzeige an dem Anzeigemittel einen Schritt zur Anzeige eines Bilds eines Typs, welcher von der in dem Anweisungsannahmeschritt angenommenen Anweisung aus den mehreren Typen von Bildern ausgewählt wurde, wenn die Anweisung in dem Anweisungsannahmeschritt angenommen wird, und Anzeigen eines Bilds eines Typs, welcher in dem Festlegungsschritt aus den mehreren Typen von Bildern festgelegt wurde, wenn die Anweisung nicht in dem Anweisungsannahmeschritt angenommen wird, beinhaltet.

10. Computerlesbares Speichermedium mit darauf codiertem Anzeigesteuerungsprogramm, welches mittels eines Computers (111) ausgeführt wird, wobei der Computer konfiguriert ist, eine Bilderzeugungsvorrichtung (100) zu steuern,
wobei die Bilderzeugungsvorrichtung Folgendes beinhaltet
ein Kommunikationsmittel (112) zum Kommunizieren mit einer tragbaren Informationsvorrichtung (200),
ein Operationsannahmemittel (163), in welches eine Operation durch einen Benutzer eingegeben wird, und
ein Anzeigemittel (161) zum Anzeigen eines Bildes, wobei das Anzeigesteuerungsprogramm den Computer veranlasst, folgende Schritte auszuführen:
Empfangen (S02) einer Anforderung aus der tragbaren Informationsvorrichtung; und **dadurch gekennzeichnet, dass** der Computer weiter die folgenden Schritte ausführt:
Übertragen (S03), als Reaktion auf die Anforderung, welche in dem Empfangsschritt empfangen wird, eines der Anforderung entsprechenden Operationsbildschirms, welcher unter einer Vielzahl von Operationsbildschirmen zur Annahme einer Operation an der tragbaren Informationsvorrichtung über das Kommunikationsmittel empfangen wurde; und
Anzeigen (S10, S12, S14, S17, S19) eines Hilfebildschirms (93) zur Unterstützung des Benutzers beim Operieren in dem auf einem Anzeigemittel (205) der tragbaren Informationsvorrichtung (200) angezeigten Operationsbildschirm an dem Anzeigemittel (161) als Reaktion auf die Übertragung des Operationsbildschirms, wobei der Hilfebildschirm (93) bereitgestellt wird, um die Eingabe desselben Benutzers wie des Benutzers, welcher auf dem auf der tragbaren Informationsvorrichtung (200) angezeigten Operationsbildschirm eingibt, zu unterstützen.

11. Computerlesbares Speichermedium mit darauf codiertem Anzeigesteuerungsprogramm nach Anspruch 10, wobei das Anzeigesteuerungsprogramm den Computer veranlasst, weiter einen Schritt (S06) zum Festlegen eines aus mehreren Typen von Bildern ausgewählten Bildes zur Anzeige auszuführen, und
der Schritt (S10, S12, S14) zur Anzeige an dem Anzeigemittel einen Schritt zur Anzeige eines Bildes eines Typs beinhaltet, welcher in dem Festlegungsschritt aus den mehreren Typen von Bildern als das Bild zur Anzeige festgelegt wurde.

12. Computerlesbares Speichermedium mit darauf codiertem Anzeigesteuerungsprogramm nach Anspruch 11, wobei das Anzeigesteuerungsprogramm den Computer veranlasst, weiter einen Anweisungsannahme/-empfangsschritt (S04) zum Annehmen einer Anweisung zum Auswählen eines aus den mehreren Typen von Bildern aus der tragbaren Informationsvorrichtung auszuführen, und
der Schritt zur Anzeige an dem Anzeigemittel (161) einen Schritt zur Anzeige eines Bilds eines Typs, welcher von der in dem Anweisungsannahme/-empfangsschritt angenommenen Anweisung aus den mehreren Typen von Bildern ausgewählt wurde, wenn die Anweisung in dem Anweisungsannahme/-empfangsschritt angenommen wird, und Anzeigen eines Bilds eines Typs, welcher in dem Festlegungsschritt aus den mehreren Typen von Bildern festgelegt wurde, wenn die Anweisung nicht in dem Anweisungsannahme/-empfangsschritt angenommen wird, beinhaltet.

## Revendications

1. Appareil de formation d'images (100), comprenant :
un moyen de communication (112) pour communiquer avec un dispositif d'informations portable (200) ;
un moyen d'acceptation d'opération (163) dans lequel une opération par un utilisateur est entrée ;
un moyen d'affichage (161) pour afficher une image ; **caractérisé en ce que** l'appareil de formation d'images comprend en outre :
un moyen de transmission d'écran d'opération (57) pour transmettre, en réponse à une demande qui est reçue à partir dudit dispositif d'informations portable (200), un écran d'opération correspondant à ladite demande reçue parmi une pluralité d'écrans d'opération permettant d'accepter une opération sur ledit dispositif d'informations portable (200) via ledit moyen de communication (112) ; et
un moyen de commande d'affichage (69) pour afficher au niveau dudit moyen d'affichage (161) en réponse à la transmission dudit écran d'opération un écran d'aide (93) permettant d'assister l'utilisateur pour procéder à une opération dans l'écran d'opération qui est affiché sur un moyen d'affichage (205) du dispositif d'informations portable (200), l'écran d'aide (93) étant fourni pour assister l'entrée du même utilisateur comme étant l'utilisateur qui réalise une entrée sur l'écran d'opération affiché sur le dispositif d'informations portable (200).

2. Appareil de formation d'images selon la revendication 1, comprenant en outre un moyen de définition (53) pour définir un sélectionné à partir de multiples types d'images comme étant une image pour affichage, dans lequel
ledit moyen de commande d'affichage (71) affiche une image d'un type défini comme étant l'image pour affichage par ledit moyen de définition (53) parmi lesdits multiples types d'images.

3. Appareil de formation d'images selon la revendication 2, comprenant en outre un moyen d'acceptation d'instruction (59) pour accepter à partir dudit dispositif d'informations portable (200) une instruction pour sélectionner un à partir desdits multiples types d'images, dans lequel
ledit moyen de commande d'affichage (71) affiche une image d'un type sélectionné par l'instruction acceptée par ledit moyen d'acceptation d'instruction (59) parmi lesdits multiples types d'images si l'instruction est acceptée par ledit moyen d'acceptation d'instruction (59) et affiche une image d'un type défini par ledit moyen de définition (53) parmi lesdits multiples types d'images si l'instruction n'est pas acceptée par ledit moyen d'acceptation d'instruction (59).

4. Appareil de formation d'images selon la revendication 1, comprenant en outre un moyen d'obtention d'image (63) pour obtenir une image spécifiée par une adresse de réseau acceptée si une adresse de réseau attribuée à une image est reçue à partir dudit dispositif d'informations portable (200), dans lequel
ledit moyen de commande d'affichage (73) affiche ladite image obtenue si l'adresse de réseau permettant de spécifier l'image est reçue à partir dudit dispositif d'informations portable (200).

5. Appareil de formation d'images selon la revendication 1, comprenant en outre :
un moyen de détection d'erreur (65) pour détecter une erreur qui se produit dans l'appareil, et
un moyen de stockage d'écran de problème (115) pour stocker une pluralité d'écrans pour le dépannage qui correspondent respectivement à une pluralité d'erreurs qui se produisent dans l'appareil et qui indiquent une opération par un utilisateur s'occupant des erreurs, dans lequel
ledit moyen de commande d'affichage (75) affiche un écran pour le dépannage correspondant à une erreur détectée si une erreur est détectée par ledit moyen de détection d'erreur.

6. Appareil de formation d'images selon la revendication 1, comprenant en outre un moyen de scanographie de manuscrit original (67) pour scanner une feuille d'un manuscrit original et pour obtenir une image de manuscrit original, dans lequel
ledit moyen de commande d'affichage (77) affiche une image de manuscrit original obtenue si ladite image de manuscrit original est obtenue par ledit moyen de scanographie de manuscrit original.

7. Procédé de commande d'affichage exécuté par un appareil de formation d'images (100),
ledit appareil de formation d'images incluant un moyen de communication (112) pour communiquer avec un dispositif d'informations portable (200),
un moyen d'acceptation d'opération (163) dans lequel une opération par un utilisateur est entrée, et
un moyen d'affichage (161) pour afficher une image, ledit procédé de commande d'affichage comprenant les étapes de :
réception (S02) d'une demande à partir dudit dispositif d'informations portable ; et **caractérisé en ce que** le procédé comprend en outre les étapes de :
transmission (S03) en réponse à ladite demande qui est reçue dans ladite étape de réception d'un écran d'opération correspondant à ladite demande reçue parmi une pluralité d'écrans d'opération permettant d'accepter une opération sur ledit dispositif d'informations portable via ledit moyen de communication (112) ; et affichage (S10, S12, S14, S17, S19) au niveau dudit moyen d'affichage (161) en réponse à la transmission dudit écran d'opération, d'un écran d'aide (93) permettant d'assister l'utilisateur pour procéder à une opération dans l'écran d'opération qui est affiché sur un moyen d'affichage (205) du dispositif d'informations portable (200), l'écran d'aide (93) étant fourni pour assister l'entrée du même utilisateur comme étant l'utilisateur qui réalise une entrée sur l'écran d'opération affiché sur le dispositif d'informations portable (200).

8. Procédé de commande d'affichage selon la revendication 7, comprenant en outre une étape (S06) de définition d'un sélectionné à partir de multiples types d'images comme étant une image pour affichage, dans lequel
l'étape d'affichage au niveau dudit moyen d'affichage inclut une étape (S10, S12, S14) d'affichage d'une image d'un type défini comme étant l'image pour affichage dans ladite étape de définition parmi lesdits multiples types d'images.

9. Procédé de commande d'affichage selon la revendication 8, comprenant en outre une étape d'acceptation d'instruction (S04) pour accepter à partir dudit dispositif d'informations portable (200) une instruction pour sélectionner un à partir desdits multiples types d'images, dans lequel
l'étape d'affichage au niveau dudit moyen d'affichage inclut une étape d'affichage d'une image d'un type sélectionné par l'instruction acceptée dans ladite étape d'acceptation d'instruction parmi lesdits multiples types d'images si l'instruction est acceptée dans ladite étape d'acceptation d'instruction et d'affichage d'une image d'un type défini dans ladite étape de définition parmi lesdits multiples types d'images si l'instruction n'est pas acceptée dans ladite étape d'acceptation d'instruction.

10. Support d'enregistrement lisible par ordinateur codé avec un programme de commande d'affichage qui est exécuté par un ordinateur (111), ledit ordinateur étant configuré pour commander un appareil de formation d'images (100),
ledit appareil de formation d'images incluant
un moyen de communication (112) pour communiquer avec un dispositif d'informations portable (200),
un moyen d'acceptation d'opération (163) dans lequel une opération par un utilisateur est entrée, et
un moyen d'affichage (161) pour afficher une image, dans lequel ledit programme de commande d'affichage amène ledit ordinateur à exécuter les étapes de :
réception (S02) d'une demande à partir dudit dispositif d'informations portable ; et **caractérisé en ce que** l'ordinateur exécute en outre les étapes de :
transmission (S03) en réponse à ladite demande qui est reçue dans ladite étape de réception d'un écran d'opération correspondant à ladite demande reçue parmi une pluralité d'écrans d'opération permettant d'accepter une opération sur ledit dispositif d'informations portable via ledit moyen de communication ; et
affichage (S10, S12, S14, S17, S19) au niveau dudit moyen d'affichage (161) en réponse à la transmission dudit écran d'opération, d'un écran d'aide (93) permettant d'assister l'utilisateur pour procéder à une opération dans l'écran d'opération qui est affiché sur un moyen d'affichage (205) du dispositif d'informations portable (200), l'écran d'aide (93) étant fourni pour assister l'entrée du même utilisateur comme étant l'utilisateur qui réalise une entrée sur l'écran d'opération affiché sur le dispositif d'informations portable (200).

11. Support d'enregistrement lisible par ordinateur codé avec un programme de commande d'affichage selon la revendication 10, dans lequel ledit programme de commande d'affichage amène ledit ordinateur à exécuter en outre une étape (S06) de définition d'un sélectionné à partir de multiples types d'images comme étant une image pour affichage, et
l'étape (S10, S12, S14) d'affichage au niveau dudit moyen d'affichage inclut une étape d'affichage d'une image d'un type défini comme étant l'image pour affichage dans ladite étape de définition parmi lesdits multiples types d'images.

12. Support d'enregistrement lisible par ordinateur codé avec un programme de commande d'affichage selon la revendication 11, dans lequel ledit programme de commande d'affichage amène ledit ordinateur à exécuter en outre une étape d'acceptation/réception d'instruction (S04) pour accepter à partir dudit dispositif d'informations portable une instruction pour sélectionner un à partir desdits multiples types d'images, et
l'étape d'affichage au niveau dudit moyen d'affichage (161) inclut une étape d'affichage d'une image d'un type sélectionné par l'instruction acceptée dans ladite étape d'acceptation/réception d'instruction parmi lesdits multiples types d'images si l'instruction est acceptée dans ladite étape d'acceptation/réception d'instruction et d'affichage d'une image d'un type défini dans ladite étape de définition parmi lesdits multiples types d'images si l'instruction n'est pas acceptée dans ladite étape d'acceptation/réception d'instruction.
